Europäisches Patentamt

European Patent Office

Office européen des brevets

(11) Veröffentlichungsnummer: **0 224 434**
**A1**

# (12) EUROPÄISCHE PATENTANMELDUNG

(21) Anmeldenummer: 86730183.0

(22) Anmeldetag: 05.11.86

(51) Int. Cl.⁴: **H 01 B 13/14**

(30) Priorität: 27.11.85 DE 3542302

(43) Veröffentlichungstag der Anmeldung:
03.06.87 Patentblatt 87/23

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2 (DE)**

(72) Erfinder: **Priesnitz, Ulrich, Dipl.-Ing.**
**Fliederstrasse 8**
**D-2908 Friesoythe (DE)**

(54) **Extrusion einer Kunststoffisolierung auf einen Leiter.**

(57) Bei dem Verfahren gemäß der Erfindung wird eine Kunststoffisolierung zur Isolierung eines Leiters für ein Nachrichtenkabel in Form eines Isolierschlauches (8) extrudiert, dessen Innendurchmesser zunächst größer ist als der Außendurchmesser des zu isolierenden Leiters (7). Die so aufgebrachte Isolierung wird nach Durchlaufen des üblichen Kühlprozesses (13) durch eine Kaltverformung fest auf den Leiter gepreßt.

EP 0 224 434 A1

## Beschreibung

### Extrusion einer Kunststoffisolierung auf einen Leiter

Die Erfindung bezieht sich auf ein Verfahren zum Aufbringen einer Kunststoffisolierung auf einen Leiter für Nachrichtenkabel durch Extrusion.

Um die dielektrischen Daten einer mit einem Thermoplast isolierten Nachrichtenkabelader zu verbessern. ist es bekannt (DE-PS 863 959) ein Gas. z. B. Luft oder Stickstoff. in die Schmelze einzubringen

Das Einbringen von Gasen in eine solche Schmelze erfolgte bisher mit Hilfe eines chemischen Treibmittels, das bei der Schmelzetemperatur ein Gas abspaltet oder durch direktes Einblasen des Gases in die Schmelze. Diese Verfahren eignen sich jedoch nicht für Isolationen mit kleineren Wanddikken.

Der Erfindung liegt daher die Aufgabe zugrunde, ein andres Verfahren zum Verbessern der dielektrischen Werte für die Isolation einer Nachrichtenkabelader o. dgl. anzugeben. Zur Lösung dieser Aufgabe wird gemäß der Erfindung vorgeschlagen. daß der Innendurchmesser des vom Spritzkopf eines Extruders ausgebrachten Isolierschlauches größer ist als der Außendurchmesser des zu isolierenden Leiters und daß die so aufgebrachte Isolierung nach Durchlaufen des üblichen Kühlprozesses durch eine Kaltverformung fest auf den Leiter gepreßt wird.

Die mit Hilfe dieses Verfahrens bewirkte Kaltverformung der Kunststoffisolierung führt zu einer bestimmten Orientierung der Makromoleküle. Durch diese Orientierung werden innerhalb des Thermoplastes Mikrohohlräume erzeugt. die für eine Herabsetzung der Dielektrizitätszahl verantwortlich sind.

In Ausgestaltung des Verfahrens bevorzugt man für die auf den Leiter aufgebrachte Isolierung einen polyolefinischen Thermoplast, der auf der Basis von Propylen und Methylpenten zusammengesetzt ist.

Zur Durchführung des Verfahrens gemäß der Erfindung wird man vorzugsweise eine Vorrichtung einsetzen. bei der der Spritzkopf des Extruders zum Ausbringen der Isolation so ausgebildet ist. daß ein Isolierschlauch extrudiert wird, dessen Innendurchmesser größer ist als der Außendurchmesser des Leiters und bei der hinter dem Kühlbecken der Extruderlinie eine gesonderte Abzugsvorrichtung für den extrudierten Isolierschlauch vorgesehen ist.

Auf diese Weise können der zu isolierende Leiter und die extrudierte Isolierung während der Kühlphase mit unterschiedlichen Geschwindigkeiten abgezogen werden. wobei der Abzug des Leiters mit der größeren Geschwindigkeit erfolgt. Wenn die schlauchförmige Isolierung nahezu auf Raumtemperatur abgekühlt ist, kann sie danach durch ein geeignetes Werkzeug mit dem schneller laufenden Leiter in Berührung gebracht werden. Dabei wird sie soweit gereckt. daß sie fest auf dem Leiter haftet. Durch die dabei aufgetretene Kaltverformung wird - wie bereits dargelegt - die Dielektrizitätszahl herabgesetzt.

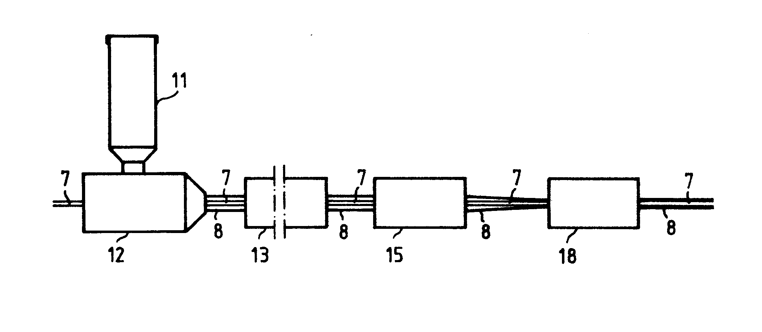

Die Erfindung wird anhand des nachstehend beschriebenen und in der Zeichnung dargestellten Ausführungsbeispieles im einzelnen erläutert.

Die einzige Figur zeigt einen schematischen Aufbau einer zur Durchführung der Erfindung geeigneten Extruderlinie.

Der Leiter 7 wird durch einen üblichen Querspritzkopf 12 eines Extruders 11 geführt. Bei Austritt aus dem Querspritzkopf wird der Leiter 7 mit einem Isolierschlauch 8 umgeben, dessen Innendurchmesser größer ist als der Außendurchmesser des Leiters. Die ausgebrachte Isolierung wird in einer üblichen Kühlvorrichtung 13 annähernd auf Raumtemperatur herabgekühlt. Hinter der Kühlvorrichtung ist eine Vorrichtung 15 vorgesehen, die den Abzug des Isolierschlauches mit einer gegenüber dem Leiter veränderten Geschwindigkeit bewirkt und steuert. Die Vorrichtung ist dabei so ausgebildet, daß die Geschwindigkeit des Isolierschlauches $v_1$ kleiner ist als die Abzugsgeschwindigkeit $v_2$ des Leiters 7. Hinter der Vorrichtung 15 ist die Abzugseinrichtung 18 für den Leiter 7 angeordnet, die mit Hilfe eines Einlaufnipppels den im Durchmesser größeren Isolierschlauch in Kontakt mit dem Leiter bringt. Dabei wird der Isolierschlauch gereckt und haftet anschließend fest auf dem Leiter.

## Patentansprüche

1. Verfahren zum Aufbringen einer Kunststoffisolierung auf einen Leiter für Nachrichtenkabel durch Extrusion, **dadurch gekennzeichnet**, daß der Innendurchmesser des vom Spritzkopf (12) eines Extruders (11) ausgebrachten Isolierschlauches (8) größer ist als der Außendurchmesser des zu isolierenden Leiters (7) und daß die so aufgebrachte Isolierung nach Durchlaufen des üblichen Kühlprozesses durch eine Kaltverformung fest auf den Leiter gepreßt wird.

2. Verfahren nach Anspruch 1. **dadurch gekennzeichnet**. daß die auf den Leiter aufgebrachte Isolierung (8) aus einem polyolefinischen Thermoplast besteht. der auf der Basis von Propylen und Methylpenten zusammengesetzt ist.

3. Vorrichtung zur Durchführung des Verfahrens nach den Ansprüchen 1 und/oder 2, **dadurch gekennzeichnet**. daß der Spritzkopf (12) des Extruders (11) zum Ausbringen der Isolierung so ausgebildet ist. daß ein Isolierschlauch (8) extrudiert wird, dessen Innendurchmesser größer ist als der Außendurchmesser des Leiters (7) und daß hinter dem Kühlbecken (13) der Extruderlinie eine gesonderte Abzugsvorrichtung (15) für den extrudierten Isolierschlauch (8) vorgesehen ist.

0224434

85 P 4125

## EINSCHLÄGIGE DOKUMENTE

EP 86730183.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - C1 - 762 856 (SIEMENS) <br> * Anspruch 1; Seite 2, Zeilen 51-55 * <br> -- | 1 | H 01 B 13/14 |
| X | DE - A1 - 2 110 934 (AKZO N.V.) <br> * Anspruch 1 * <br> -- | 1 | |
| X;Y | GB - A - 1 599 106 (B.I.C.C.) <br> * Seite 2, Zeile 56 - Seite 3, Zeile 18; Anspruch 1; Fig. 1 * <br> -- | 1,3;2 | |
| Y | CHEMICAL ABSTRACTS, Vol. 83, 17. November - 1. Dezember 1975, Columbus, Ohio, USA Seite 61 <br> * Zusammenfassung-Nr. 83: 165 380a <br> & JP-A2-50-63 073 (MATSUSHITA) <br> ---- | 2 | |

**RECHERCHIERTE SACHGEBIETE (Int. Cl.4)**

H 01 B

B 29 C 47/00

Der vorliegende Recherchenbericht wurde für alle Patentansprüche erstellt.

| Recherchenort | Abschlußdatum der Recherche | Prüfer |
|---|---|---|
| WIEN | 25-02-1987 | KUTZELNIGG |